(19) Europäisches Patentamt
European Patent Office
Office européen des brevets

(11) **EP 4 692 726 A1**

(12) **DEMANDE DE BREVET EUROPEEN**

(43) Date de publication:
**11.02.2026 Bulletin 2026/07**

(21) Numéro de dépôt: **25193998.9**

(22) Date de dépôt: **05.08.2025**

(51) Classification Internationale des Brevets (IPC):
**G01C 15/00** *(2006.01)*  **G01C 21/20** *(2006.01)*
**G01S 5/00** *(2006.01)*

(52) Classification Coopérative des Brevets (CPC):
**G01C 21/20; G01C 15/00;** G01S 5/16; G01S 5/163

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **06.08.2024 FR 2408693**

(71) Demandeur: **THALES**
**92190 Meudon (FR)**

(72) Inventeur: **HEURGUIER, Dominique**
**92622 GENNEVILLIERS CEDEX (FR)**

(74) Mandataire: **Lavoix**
**2, place d'Estienne d'Orves**
**75441 Paris Cedex 09 (FR)**

(54) **PROCÉDÉ DE GÉOLOCALISATION EN POSITION ET EN ATTITUDE D'UN DISPOSITIF MOBILE PAR RECALAGE SUR AU MOINS TROIS AMERS, PRODUIT PROGRAMME D'ORDINATEUR ET DISPOSITIF DE GÉOLOCALISATION ASSOCIÉS**

(57) Le procédé de géolocalisation comprend les étapes :
- acquisition de mesures de gisement, de site et de distance des trois amers dans un repère du dispositif mobile,
- détermination d'une attitude estimée du dispositif mobile dans un repère terrestre en optimisant un critère ayant pour unique inconnue l'attitude estimée du dispositif mobile et utilisant les mesures de gisement, de site et de distance, et des positions connues des trois amers dans le repère terrestre,
- conversion des mesures de gisement et de site des trois amers pour obtenir des azimuts et des élévations des trois amers dans le repère terrestre en utilisant l'attitude estimée,
- détermination itérative d'une position estimée du dispositif mobile dans le repère terrestre en utilisant les azimuts, les élévations et les distances des trois amers.

FIG.1

**Description**

**DOMAINE**

La présente invention concerne un procédé de géolocalisation d'un dispositif mobile par recalage sur une pluralité d'amers.

La présente invention concerne également un produit programme d'ordinateur et un dispositif de géolocalisation associés à ce procédé de géolocalisation.

ART ANTERIEUR

Par « amer », on entend tout objet naturel ou artificiel repérable par le dispositif mobile et dont la position est connue ou déterminable.

Selon des méthodes de relèvement déjà connues dans l'état de la technique, il est possible de géolocaliser partiellement un dispositif mobile en utilisant une pluralité d'amers.

Pour ce faire, le dispositif mobile est généralement apte à mesurer des directions (sites ou gisements) par rapport aux amers et/ou des distances jusqu'à ceux-ci. Ainsi, en analysant ces mesures et les positions connues des amers, il est possible d'obtenir des informations relatives à la position du dispositif mobile et son attitude (orientation).

Les méthodes de géolocalisation sur amers connues sont soit bidimensionnelles ou 2D (estimation de la position en latitude, longitude et éventuellement du cap), soit tridimensionnelles ou 3D en exploitant les données d'une centrale de navigation, par exemple des mesures d'élévation par rapport à l'horizontale.

Toutefois, ces méthodes connues ne permettent pas d'estimer à la fois la position 3D et l'attitude 3D (cap, roulis, tangage) à partir de mesure de visées sur 3 amers si l'on ne dispose pas de capteur(s) d'attitude.

Un but de l'invention est de remédier à tout ou partie des inconvénients ci-dessus, en fournissant un procédé permettant de réaliser une géolocalisation en position 3D et en attitude 3D sur trois amers sans utiliser une centrale de navigation.

RESUME DE L'INVENTION

À cet effet, l'invention a pour objet un procédé de géolocalisation en position et en attitude d'un dispositif mobile par recalage sur au moins trois amers, comprenant les étapes suivantes :

- acquisition de mesures de gisement, de site et de distance des trois amers par rapport au dispositif mobile dans un repère du dispositif mobile,
- détermination d'une attitude estimée du dispositif mobile dans un repère terrestre en optimisant un critère ayant pour unique inconnue l'attitude estimée du dispositif mobile et utilisant les mesures de gisement, de site et de distance, et des positions connues des trois amers dans le repère terrestre,
- conversion des mesures de gisement et de site des trois amers pour obtenir des azimuts et des élévations des trois amers dans le repère terrestre en utilisant l'attitude estimée, et
- détermination itérative d'une position estimée du dispositif mobile dans le repère terrestre en utilisant les azimuts, les élévations et les distances des trois amers.

Suivant d'autres aspects avantageux de l'invention, le procédé comprend une ou plusieurs des caractéristiques suivantes, prise(s) isolément ou suivant toutes les combinaisons techniquement possibles :

- la détermination de la position utilise un algorithme de type Gauss-Newton ;
- le procédé comprend en outre une étape de contrôle de cohérence de résidus de la position estimée, et de contrôle de cohérence de la position estimée et de l'attitude estimée par rapport aux mesures de gisement, de site et de distance :
- le procédé comprend en outre une détermination des variances de l'attitude estimée et de la position estimée utilisant une méthode de Monte-Carlo séquentielle ;
- le procédé comprend en outre une détermination conjointe d'une position améliorée et d'une attitude améliorée du dispositif mobile par une estimation itérative à partir de la position estimée et de l'attitude estimée :
- l'attitude estimée du dispositif mobile est déterminée par un algorithme de type Kabsch fournissant une matrice de rotation optimale entre le repère terrestre et le repère du dispositif mobile ;
- la conversion des mesures de gisement et de site comprend un calcul des variances des azimuts et des élévations des trois amers.

La présente invention a également pour objet un produit programme d'ordinateur comportant des instructions logicielles qui, lorsque mises en œuvre par un équipement informatique, mettent en œuvre le procédé tel que défini ci-dessus.

La présente invention a également pour objet un dispositif de géolocalisation d'un dispositif mobile adapté pour réaliser un recalage sur au moins trois amers, comprenant des moyens techniques adaptés pour mettre en œuvre le procédé tel que défini ci-dessus.

BREVE DESCRIPTION DES DESSINS

L'invention apparaîtra plus clairement à la lecture de la description qui va suivre, donnée uniquement à titre d'exemple non limitatif, et faite en référence aux dessins annexés, dans lesquels :

- la figure 1 est une vue schématique d'un dispositif de géolocalisation selon l'invention, et
- la figure 2 est un organigramme d'un procédé géolocalisation selon l'invention, le procédé étant mis en œuvre par le dispositif de géolocalisation de la figure 1.

DESCRIPTION DETAILLEE

Dispositif de géolocalisation

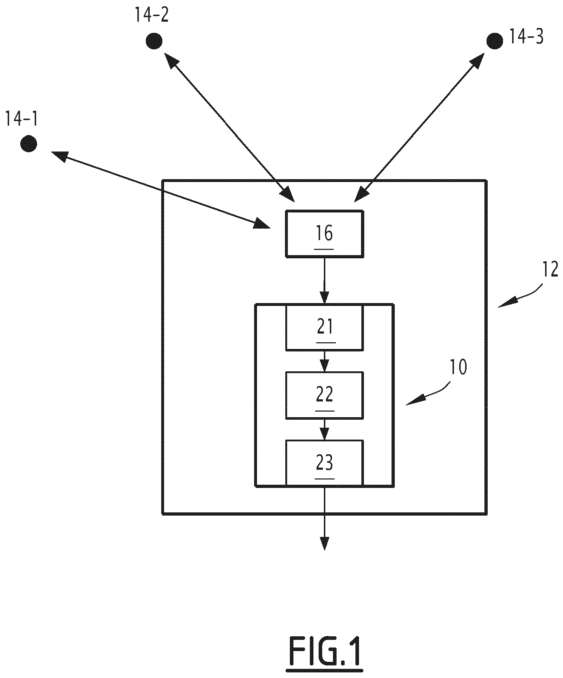

On a en effet représenté sur la figure 1, un dispositif de géolocalisation 10 selon l'invention apte à déterminer ou à préciser la position d'un dispositif mobile 12 à chaque instant. Le dispositif mobile 12 est apte à se déplacer dans un repère terrestre.

Selon un exemple de réalisation, le dispositif mobile 12 est un engin mobile, tel que par exemple un véhicule terrestre ou un aéronef, embarquant le dispositif de géolocalisation 10. Dans le cas d'un aéronef, il peut s'agir d'un avion ou d'un hélicoptère pilotable par un opérateur et/ou par un système avionique à partir de celui-ci, ou d'un drone pilotable à partir d'un centre de contrôle distant par un opérateur et/ou par un système avionique adapté.

Selon un autre exemple de réalisation, le dispositif mobile 12 est porté par un opérateur ou par tout autre utilisateur et présente par exemple un téléphone portable. Dans ce cas, le dispositif de géolocalisation 10 est par exemple intégré dans le dispositif mobile 12.

Le dispositif de géolocalisation 10 est apte à déterminer une position estimée et une attitude estimée du dispositif mobile 12 dans le repère terrestre en utilisant des mesures de gisement, de site et de distance de trois amers 14-1, 14-2, 14-3 par rapport au dispositif mobile 12 dans un repère du dispositif mobile, sans recourir à des données provenant d'une centrale de navigation.

Le dispositif de géolocalisation 10 comprend avantageusement des capteurs 16 adaptés pour viser les trois amers 14-1, 14-2, 14-3 et générer les mesures.

Avantageusement, le dispositif de géolocalisation 10 et le dispositif mobile 12 sont dépourvus d'une centrale de navigation.

Chaque amer 14-1, 14-2, 14-3 est un objet naturel ou artificiel disposé par exemple de manière fixe sur la surface terrestre selon une position connue avec une précision également connue et repérable depuis le dispositif mobile 12. Ainsi, chaque amer est par exemple un pylône, une éolienne, un phare, un bâtiment, une montagne, un rocher, etc.

Chaque amer 14-1, 14-2, 14-3 est par exemple identifiable par un identifiant qui lui est propre. En outre, selon un mode de réalisation particulier de l'invention, l'identifiant de chaque amer 14-1, 14-2,14-3 permet d'obtenir la position de chaque amer et la précision associée en utilisant par exemple une base de données de positions prévue à cet effet. Une telle base de données peut être publiquement accessible ou présenter un accès restreint.

Le repère du dispositif mobile 12 présente par exemple un axe coïncidant avec le cap de cet engin.

Comme cela est visible sur la figure 1, le dispositif de géolocalisation 10 comprend un module d'entrée 21, un module de calcul 22 et un module de sortie 23.

Le module d'entrée 21 est connecté aux capteurs 16 et est apte à acquérir les mesures générées par les capteurs 16. Selon un exemple de réalisation, le module d'entrée 21 est connecté en outre à au moins un système, par exemple un système embarqué, apte à fournir une position connue approximative du dispositif mobile 12. Cette position peut par exemple correspondre à la dernière position connue du dispositif mobile 12 ou une position qui a besoin d'être précisée.

Le module de calcul 22 est apte à analyser les données acquises par le module d'entrée 21 afin de fournir un résultat déterminant ou précisant la position du dispositif mobile 12.

Enfin, le module de sortie 23 est apte à fournir le résultat déterminé par le module de calcul 22 à tout système intéressé. Par exemple, le module de sortie 23 est apte à fournir à un écran d'affichage la position et/ou l'attitude déterminée(s) du dispositif mobile 12 pour l'afficher. Selon un autre exemple, le module de sortie 23 est apte à fournir cette position par exemple à un dispositif de précision apte à comparer cette position avec celle fournie par exemple par un système de géolocalisation de type GNSS, afin de fournir une position précise.

Chacun des modules 21 à 23 se présente par exemple sous la forme d'un logiciel mis en œuvre par un processeur adapté. En variante, au moins l'un de ces modules 21 à 23 se présente au moins partiellement sous la forme d'un circuit logique programmable, tel qu'un circuit de type FPGA (de l'anglais « Field Programmable Gate Array »).

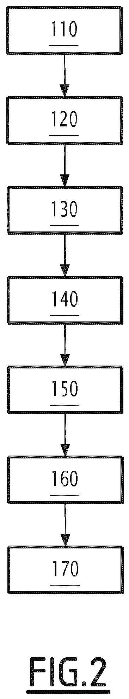

Le procédé de géolocalisation sera désormais expliqué en référence à la figure 2 présentant un organigramme de ses étapes.

Initialement, il est considéré que le dispositif mobile 12 se déplace à proximité des amers 14-1, 14-2, 14-3 et que les capteurs 16 effectuent au moins trois mesures de gisement, au moins trois mesures de site et au moins trois mesures de distance correspondant au moins aux trois amers 14-1, 14-2, 14-3, alors que le dispositif mobile 12 est dans une même position et une même attitude.

Avantageusement, les capteurs 16 effectuent trois mesures de gisement, trois mesures de site et trois mesures de distances correspondant aux trois amers 14-1, 14-2, 14-3.

Selon une variante non représentée, les capteurs 16 réalisent d'autres mesures.

Lors d'une étape initiale 110, le module d'entrée 21 acquiert les mesures de gisement, de site, et de distance et les transmet au module de calcul 22. Par la suite, les mesures de gisement sont dénotées par $g_i$, les mesures de site par $s_i$, et les mesures de distances par $\rho_i$, où $i$ est un indice associé aux amers.

Lors de la même étape 110, le module d'entrée 21 acquiert les positions $A_i$ des amers 14-1, 14-2, 14-3 dans le repère terrestre et avantageusement les précisions (ou incertitudes) associées à ces positions. Ces données sont par exemple issues d'une base de données relative aux amers, telle que définie précédemment.

Lors d'une étape 120 suivante, le module de calcul 22 détermine une attitude estimée du dispositif mobile 12 dans le repère terrestre en optimisant un critère ayant pour unique inconnue l'attitude estimée du dispositif mobile et utilisant les mesures de gisement, de site et de distance, et des positions connues des trois amers dans le repère terrestre.

On cherche par exemple à minimiser le critère suivant :

$$C(R) = \sum_{i=1}^{3} \left(A_{ptf,i} - G_{ptf} - R(A_{ned,i} - G_{ned})\right)^t W_i^{-1} \left(A_{ptf,i} - G_{ptf} - R(A_{ned,i} - G_{ned})\right),$$

où :

$C(R)$ est une expression à minimiser,
$R$ est une matrice de rotation liée à l'attitude du dispositif mobile 12,
$A_{ptf,i}$ est la position de l'amer $A_i$ dans le repère du dispositif mobile 12, ou repère PTF (pour « plateforme » en français), et $G_{ptf}$ est le barycentre des trois amers dans le repère du dispositif mobile 12,
$A_{ned,i}$ est la position de l'amer $A_i$ dans le repère terrestre, par exemple un repère de type « NED » (de l'anglais « North », « Est » et « Down ») comprenant les directions locales « Nord », « Est », « Bas » en français, et $G_{ned}$ est le barycentre des trois amers dans le repère terrestre, et
$W$ est par exemple la matrice « identité » ($W = I_3$), pour obtenir une expression de type « moindres carrés » :

$$C(R) = \sum_{i=1}^{3} \left(A_{ptf,i} - G_{ptf} - R(A_{ned,i} - G_{ned})\right)^t \left(A_{ptf,i} - G_{ptf} - R(A_{ned,i} - G_{ned})\right)$$

Il est à noter que $X_{ned}$, figurant la position du dispositif mobile 12 dans le repère terrestre, est absente du critère.

On a $A_{ptf,i} = \rho_i.u_{ptf}(g_i,s_i)$, où $u_{ptf}(g_i,s_i)$ est un vecteur unitaire pointant vers l'amer $A_i$ dans le repère du dispositif mobile 12.

On a $u_{ptf}(g_i,s_i) = [\cos g_i.\cos s_i \ \sin g_i.\cos s_i \ -\sin s_i]$

$$G_{ptf} = \frac{1}{3}\sum_{i=1}^{3} A_{ptf,i} \quad ; \quad G_{ned} = \frac{1}{3}\sum_{i=1}^{3} A_{ned,i}$$

La matrice R permet de passer du repère terrestre au repère du dispositif mobile 12. Elle est telle que $A_{ptf,i} = R.(A_{ned,i} - X_{ned})$.

Dans le critère C(R), on a utilisé l'expression $(A_{ptf,i} - G_{ptf}) = R.(A_{ned,i} - G_{ned})$. Dit autrement, l'utilisation des barycentres $G_{ptf}$ et $G_{ned}$ dans le critère $C(R)$ permet d'éliminer la position $X_{ned}$.

La matrice $R$ peut s'écrire sous la forme suivante :

$$R = \begin{pmatrix} \cos\theta\cos\Psi & \cos\theta\sin\Psi & -\sin\theta \\ \sin\phi\sin\theta\cos\Psi - \cos\phi\sin\Psi & \cos\phi\cos\Psi + \sin\phi\sin\theta\sin\Psi & \sin\phi\cos\theta \\ \sin\phi\sin\Psi + \cos\phi\sin\theta\cos\Psi & \cos\phi\sin\theta\sin\Psi - \sin\phi\cos\Psi & \cos\phi\cos\theta \end{pmatrix},$$

où $\theta$, $\phi$ et $\Psi$ sont les angles d'Euler correspondant respectivement au tangage, au roulis et au cap du dispositif mobile 12.

Ces angles peuvent être déterminés à partir de la matrice R comme suit :

$\theta$ = - asin ($R(1,3)$) ;
$\phi$ = asin ($R(2,3)$/cos $\theta$) ; et
$\Psi$ = atan 2 ($R(1,2)$/cos $\theta$, $R(1,1)$/cos $\theta$).

$$\hat{Y} = \begin{bmatrix} \Psi \\ \phi \\ \theta \end{bmatrix}$$

L'attitude estimée peut s'exprimer sous la forme .

La matrice R optimale au sens du critère C(R) est avantageusement déterminée par un algorithme de type Kabsch.

On définit par exemple les matrices suivantes :

$$P = \left[ (A_{ptf,i} - G_{ptf})' \right] \quad ; \quad Q = \left[ (A_{ned,i} - G_{ned})' \right] \quad ; \quad H = P' * Q.$$

Et on calcule la décomposition en valeurs singulières (en anglais *Singular Value Decomposition* ou SVD) de la matrice H :

$$[U, S, V] = SVD\,(H).$$

On introduit $T = I_3$ avec $T(3,3) = sign(\det(V * U'))$.

La matrice R optimale est ensuite donnée par : $R = V * T * U'$.

Lors d'une étape 130 suivante, les mesures de gisement et de site des trois amers sont converties pour obtenir des azimuts et des élévations des trois amers dans le repère terrestre en utilisant l'attitude estimée.

$u_{ned,i} = R'.u_{ptf,i}$, où, comme on l'a vu,

$$u_{ptf,i} = u_{ptf}(g_i, s_i) = \begin{bmatrix} \cos g_i.\cos s_i & \sin g_i.\cos s_i & -\sin s_i \end{bmatrix}.$$

On obtient ensuite les azimuts par : $\alpha_i = atan\left(\frac{u_{ned,i,y}}{u_{ned,i,x}}\right)$ et les élévations par : $\varphi_i = -asin\left(\frac{u_{ned,i,z}}{\rho_i}\right)$, où les lettres x, y, z indiquent les coordonnées cartésiennes du vecteur $u_{ned,i}$.

Optionnellement, l'étape 130 comprend un calcul des variances des azimuts et des élévations des trois amers, par exemple en utilisant une méthode de Monte-Carlo séquentielle.

Dans cette méthode, on bruite $g_i$, $s_i$, $\rho_i$, $A_{ned,i}$ pour les trois amers à chaque tirage j selon les covariances du bruit de mesure souhaité.

On réalise N tirages aléatoires et l'on recalcule l'azimut $\alpha_{i,j}$ et l'élévation $\varphi_{i,j}$ pour chaque amer $A_i$, j étant l'indice des tirages (j = 1, 2, ... N).

On calcule ensuite les variances empiriques pour l'azimut et l'élévation de chaque amer :

$\hat{\sigma}^2 = \frac{1}{N}\Sigma_{j=1}^{N}\left(m_j - \hat{m}\right)^2$ , avec

$m_j = \alpha_{i,j}$ ou $\varphi_{i,j}$, $\hat{m} = \alpha_i$ ou $\varphi_i$, i = 1, 2, 3.

On définit enfin la covariance des mesures converties :

$$B = diag\begin{bmatrix} \sigma_{\theta_1}^2 & \sigma_{\varphi_1}^2 & \sigma_{\rho_1}^2 & \sigma_{\theta_2}^2 & \sigma_{\varphi_2}^2 & \sigma_{\rho_2}^2 & \sigma_{\theta_3}^2 & \sigma_{\varphi_3}^2 & \sigma_{\rho_3}^2 \end{bmatrix}$$

La matrice B permet avantageusement de réaliser une estimation du maximum de vraisemblance, dans laquelle les moindres carrés sont pondérés par la covariance des mesures d'azimut et d'élévation.

A l'étape 140, on estime de manière itérative la position du dispositif mobile 12 dans le repère terrestre en utilisant les azimuts, les élévations et les distances des trois amers.

La position cherchée est par exemple initialisée à l'aide la forme close suivante :

$$X_{0ned} = \frac{1}{3}\sum_{i=1}^{3}\left(A_{ned,i} - \rho_i.u_{ned,i}\right) = \frac{1}{3}\sum_{i=1}^{3}\left(A_{ned,i} - R'.A_{ptf,i}\right),$$

où

$X_{0ned}$ est une première estimation de la position du mobile dans le repère terrestre, qui va permettre d'initialiser efficacement l'algorithme d'estimation du maximum de vraisemblance. Cet algorithme est par exemple itératif de type Gauss-Newton et permet de réaliser des améliorations successives $X_k$ jusqu'à obtenir une estimation $X_{end}$ selon un critère d'arrêt basé sur une distance entre $X_k$ et $X_{k+1}$.

Par exemple, on pose $Y_k = h(X_k)$, où :

k est un entier représentant les itérations,

$X_k$ est un vecteur donnant la position du dispositif mobile 12 dans le repère terrestre à l'itération k,

$Y_k$ est un vecteur contenant les azimuts, élévations et distances des amers théoriques correspondant à l'état $X_{k-1}$ dans le repère terrestre à l'itération k.

Plus précisément, pour chaque amer $A_i$ (i = 1, 2, 3), on définit un vecteur d'observation $h_i$ :

$$h_i(X_k) = \begin{bmatrix}\theta i \\ \varphi i \\ \rho i\end{bmatrix} = \begin{bmatrix} atan\left(\frac{y_i - y_k}{x_i - x_k}\right) \\ asin\left(\frac{z_i - z_k}{\sqrt{(x_i - x_k)^2 + (y_i - y_k)^2 + (z_i - z_k)^2}}\right) \\ \sqrt{(x_i - x_k)^2 + (y_i - y_k)^2 + (z_i - z_k)^2} \end{bmatrix},$$

avec $A_{ned_i} = \begin{bmatrix}x_i \\ y_i \\ z_i\end{bmatrix}$ et $X_k = \begin{bmatrix}x_k \\ y_k \\ z_k\end{bmatrix}$.

On calcule la matrice jacobienne $H_k = \partial h/\partial X_k$, correspondant à une linéarisation de h en $X=X_k$ : $y = Y - Y_k = H_k(X - X_k) = H_k x_k$. Et on a :

$H_k = [H_i]$, $H_i = \begin{bmatrix}\frac{\partial h_i}{\partial \alpha} \\ \frac{\partial h_i}{\partial \varphi} \\ \frac{\partial h_i}{\partial \rho}\end{bmatrix}$ est une sous-matrice jacobienne relative à l'amer Ai :

$$\frac{\partial h_i}{\partial \alpha} = \begin{bmatrix}\frac{y_i - y_k}{\rho_{hi}^2} & -\frac{x_i - x_k}{\rho_{hi}^2} & 0\end{bmatrix},$$

$$\frac{\partial h_i}{\partial \varphi} = \begin{bmatrix}\frac{(x_i - x_k)(z_i - z_k)}{\rho_i^2 \rho_{hi}} & \frac{(y_i - y_k)(z_i - z_k)}{\rho_i^2 \rho_{hi}} & -\frac{\rho_{hi}}{\rho_i^2}\end{bmatrix},$$

$$\frac{\partial h_i}{\partial \rho} = \begin{bmatrix}-\frac{x_i - x_k}{\rho_i} & -\frac{y_i - y_k}{\rho_i} & -\frac{z_i - z_k}{\rho_i}\end{bmatrix}$$

avec $\rho_{hi} = \sqrt{(x_i - x_k)^2 + (y_i - y_k)^2}$.

Avantageusement, la détermination de la position utilise un algorithme de type Gauss-Newton :

$$X_{k+1} = \left(H_k^t B^{-1} H_k\right)^{-1} H_k^t B^{-1} y_k, \text{ où :}$$

B est la matrice de covariance des mesures d'azimut, élévation et distance déterminée précédemment, et $X_{k+1}$ est l'estimation de position à l'itération k+1.

Un critère d'arrêt sur la différence de deux solutions consécutives $\|X_{k+1} - X_k\|$ est par exemple utilisé.

Après itérations, on obtient $\widehat{X_{end}}$ , $H_{end}$, $y_{end}$, où :

$\widehat{X_{end}}$ est la position estimée du dispositif mobile 12,

$H_{end}$ est la matrice jacobienne de la dernière itération, et

$y_{end}$ est la différence entre les mesures d'azimut, élévation et distance avec les mesures théoriques de l'estimation de l'état à l'avant dernière itération.

La méthode comprend une étape 150 optionnellement mise en œuvre par le module de calcul 22, dans laquelle sont réalisés un contrôle de cohérence de résidus de la position estimée, et un contrôle de cohérence de la position estimée et de l'attitude estimée par rapport aux mesures de gisement, de site et de distance.

Pour le contrôle de cohérence des résidus de la position estimée, on introduit par exemple le vecteur de parité

$$p = WB^{-\frac{1}{2}}y$$ , où

B est la matrice de covariance des mesures introduite précédemment,

y est la solution $y_{end}$ obtenue précédemment, et

W est la matrice de l'espace nul de $Q = B^{-\frac{1}{2}}H$ , c'est-à-dire que W*Q = 0, H étant la solution $H_{end}$ obtenue précédemment.

Un test de cohérence dans l'espace de parité est par exemple réalisé :

$T = p^t.p$ est comparé à un seuil. T suit une loi du $\chi^2$, avec comme nombre de degré de liberté le rang de la matrice W. Le seuil peut ainsi être défini à partir d'une probabilité de fausse alarme Pfa fixée.

Pour le contrôle de cohérence de la position estimée et de l'attitude estimée par rapport aux mesures de gisement, de site et de distance, le module de calcul 22 détermine l'attitude à partir de deux des trois amers, par exemple A1 et A2 et de la position estimée $\widehat{X_{end}}$ .

On calcule par exemple une matrice S selon l'algorithme Triad, connu en lui-même de l'homme du métier :

$$S = M1 * M2^{-1},$$

où :

$$M1 = \left[ \frac{A_{ptf_1}}{\|A_{ptf_1}\|} \quad \frac{A_{ptf_2}}{\|A_{ptf_2}\|} \quad \frac{A_{ptf_1}A_{ptf_2}}{\|A_{ptf_1}A_{ptf_2}\|} \right],$$

et

$$M2 = \left[ \frac{A_{ned_1} - X_{end}}{\|A_{ned_1} - X_{end}\|} \quad \frac{A_{ned_2} - X_{end}}{\|A_{ned_2} - X_{end}\|} \quad \frac{(A_{ned_1} - X_{end})(A_{ned_2} - X_{end})}{\|(A_{ned_1} - X_{end})(A_{ned_2} - X_{end})\|} \right]$$

On peut mettre en place un seuil sur la différence d'estimation de cap entre cet algorithme (qui utilise la position estimée) et l'estimation de cap obtenue par la méthode décrite précédemment :

Cap2 = atan2(-S(1,2)/asin(S(1,3), -S(1,1 )/asin(S(1,3))
Delta_Cap = |Cap - Cap2|, où :
Cap2 est l'estimation de cap issue de l'algorithme Triad,
Cap est l'estimation de cap par exemple réalisée par l'algorithme de Kabsh décrit précédemment.

La variable aléatoire Cap - Cap2 suit une loi gaussienne et l'on peut définir le seuil à partir d'une probabilité de fausse alarme Pfa fixée.

Par exemple, le seuil vaut 5 x sigma_cap, où sigma_cap est l'écart type de ladite loi gaussienne.

Par exemple, Pfa=$10^{-6}$.

Le dépassement du seuil permet de déclencher une alerte sur l'incohérence potentielle de l'estimation. Les estimations d'attitude et de position sont alors être considérées avec une certaine prudence. Au contraire, l'absence d'alerte permet d'avoir confiance dans l'estimation réalisée.

Optionnellement, le module de calcul 22 réalise une étape 160 de détermination des variances de l'attitude estimée et de la position estimée utilisant une méthode de Monte-Carlo séquentielle. Ceci permet de prendre en compte des incertitudes sur les positions des amers et des incertitudes sur les mesures.

Dans cette méthode, on bruite $g_i$, $s_i$, $\rho_i$, $A_{ned,i}$ pour les trois amers à chaque tirage j selon les covariances du bruit de mesure.

On réalise N tirages aléatoires et l'on recalcule les estimations de composantes d'attitude cap $\Psi_j$, tangage $\theta_j$, roulis $\phi_j$ et la position tridimensionnelle $X_j$, j étant l'indice des tirages (j = 1, 2, ... N).

On calcule ensuite les variances empiriques pour chacune de ces estimations :

$$\hat{\sigma}^2 = \frac{1}{N}\Sigma_{j=1}^{N}\left(m_j - \hat{m}\right)^2$$

, avec $m_j = \Psi_j, \theta_j$ ou $\phi_j$, et $\hat{m} = \Psi, \theta$ ou $\phi$ estimés initialement par exemple par l'algorithme de Kabsch décrit précédemment.

Pour la position, on calcule par exemple $\hat{\Gamma}_X = \frac{1}{N}\Sigma_{j=1}^{N}\left(X_j - \widehat{X_{end}}\right)\left(X_j - \widehat{X_{end}}\right)^t$ , où $X_{end}$ est l'estimation de position telle que décrite précédemment.

Optionnellement, le module de calcul 22 réalise une étape 170 de détermination conjointe d'une position améliorée et d'une attitude améliorée du dispositif mobile 12 par une estimation itérative conjointe à partir de la position estimée et de l'attitude estimée.

Cette détermination met avantageusement en œuvre un algorithme de type Levenberg-Marquardt, connu en lui-même de l'homme du métier.

Grâce aux caractéristiques décrites ci-dessus, le procédé permet de réaliser une géolocalisation en position 3D et en attitude 3D sur trois amers sans utiliser une centrale de navigation.

**Revendications**

1. Procédé de géolocalisation en position et en attitude d'un dispositif mobile (12) par recalage sur au moins trois amers (14-1, 14-2, 14-3), comprenant les étapes suivantes :

   - acquisition (110) de mesures de gisement, de site et de distance des trois amers (14-1, 14-2, 14-3) par rapport au dispositif mobile (12) dans un repère du dispositif mobile (12),
   - détermination (120) d'une attitude estimée du dispositif mobile (12) dans un repère terrestre en optimisant un critère ayant pour unique inconnue l'attitude estimée du dispositif mobile (12) et utilisant les mesures de gisement, de site et de distance, et des positions connues des trois amers dans le repère terrestre,
   - conversion (130) des mesures de gisement et de site des trois amers (14-1, 14-2, 14-3) pour obtenir des azimuts et des élévations des trois amers (14-1, 14-2, 14-3) dans le repère terrestre en utilisant l'attitude estimée, et
   - détermination (140) itérative d'une position estimée du dispositif mobile dans le repère terrestre en utilisant les azimuts, les élévations et les distances des trois amers (14-1, 14-2, 14-3).

2. Procédé selon la revendication 1, dans lequel la détermination (140) de la position utilise un algorithme de type Gauss-Newton.

3. Procédé selon la revendication 2, comprenant en outre une étape (150) de contrôle de cohérence de résidus de la position estimée, et de contrôle de cohérence de la position estimée et de l'attitude estimée par rapport aux mesures de gisement, de site et de distance.

4. Procédé selon l'une quelconque des revendications 1 à 3, comprenant en outre une détermination (160) des variances de l'attitude estimée et de la position estimée utilisant une méthode de Monte-Carlo séquentielle.

5. Procédé selon l'une quelconque des revendications 1 à 4, comprenant en outre une détermination (170) conjointe d'une position améliorée et d'une attitude améliorée du dispositif mobile (12) par une estimation itérative à partir de la position estimée et de l'attitude estimée.

6. Procédé selon l'une quelconque des revendications 1 à 5, dans lequel l'attitude estimée du dispositif mobile (12) est déterminée par un algorithme de type Kabsch fournissant une matrice de rotation optimale entre le repère terrestre et le repère du dispositif mobile (12).

7. Procédé selon l'une quelconque des revendications 1 à 6, dans lequel la conversion (130) des mesures de gisement et de site comprend un calcul des variances des azimuts et des élévations des trois amers.

8. Produit programme d'ordinateur comportant des instructions logicielles qui, lorsque mises en œuvre par un équipement informatique, mettent en œuvre le procédé selon l'une quelconque des revendications 1 à 7.

9. Dispositif de géolocalisation (10) d'un dispositif mobile (12) adapté pour réaliser un recalage sur au moins trois amers (14-1, 14-2, 14-3), comprenant des moyens techniques (21, 22, 23) adaptés pour mettre en œuvre le procédé selon l'une quelconque des revendications 1 à 8.

FIG.1

FIG.2

Europäisches
Patentamt

European
Patent Office

Office européen
des brevets

**RAPPORT DE RECHERCHE EUROPEENNE**

Numéro de la demande

EP 25 19 3998

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 4 361 563 A1 (THALES SA [FR]) 1 mai 2024 (2024-05-01) | 1-3,5-9 | INV. G01C15/00 |
| Y | * alinéas [0003], [0010], [0011], [0041], [0042], [0053] - [0064], [0073] - [0084]; revendication 5 * | 4 | G01C21/20 G01S5/00 |
| Y | ----- US 2021/082128 A1 (OKADA MASASHI [JP] ET AL) 18 mars 2021 (2021-03-18) * alinéas [0079], [0107] * | 4 | |
| X | ----- WO 2024/110445 A2 (THALES SA [FR]) 30 mai 2024 (2024-05-30) * page 13, ligne 10 - page 30, ligne 18 * ----- | 1,8,9 | |

**DOMAINES TECHNIQUES RECHERCHES (IPC)**

G01C
G01S
G06T

Le présent rapport a été établi pour toutes les revendications

| Lieu de la recherche | Date d'achèvement de la recherche | Examinateur |
|---|---|---|
| La Haye | 24 novembre 2025 | de la Rosa Rivera, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................................
& : membre de la même famille, document correspondant

EPO FORM 1503 03.82 (P04C02)

# EP 4 692 726 A1

## ANNEXE AU RAPPORT DE RECHERCHE EUROPEENNE
## RELATIF A LA DEMANDE DE BREVET EUROPEEN NO.

EP 25 19 3998

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-11-2025

| Document brevet cité au rapport de recherche | | Date de publication | Membre(s) de la famille de brevet(s) | | Date de publication |
|---|---|---|---|---|---|
| EP 4361563 | A1 | 01-05-2024 | EP | 4361563 A1 | 01-05-2024 |
| | | | FR | 3141519 A1 | 03-05-2024 |
| US 2021082128 | A1 | 18-03-2021 | CN | 112509015 A | 16-03-2021 |
| | | | JP | 7404125 B2 | 25-12-2023 |
| | | | JP | 2021043940 A | 18-03-2021 |
| | | | US | 2021082128 A1 | 18-03-2021 |
| WO 2024110445 | A2 | 30-05-2024 | EP | 4623270 A2 | 01-10-2025 |
| | | | FR | 3142247 A1 | 24-05-2024 |
| | | | WO | 2024110445 A2 | 30-05-2024 |